# EUROPEAN PATENT APPLICATION

(11) **EP 4 773 403 A1**
(43) Date of publication of application: **08.07.2026**
(21) Application number: 24857902.1
(22) Date of filing: 31.05.2024
(51) Int. Cl.: H01M 50/531, H01M 50/536, H01M 50/103, H01M 50/533, H01M 50/528, H01M 50/586, H01M 50/543, H01M 10/0525, H01M 10/058

(54) **ELECTROCHEMICAL APPARATUS AND ELECTRICAL DEVICE**

(30) Priority: 30.08.2023 CN 202311108445
(71) Applicant: Ningde Amperex Technology Ltd., Ningde, Fujian 352100 (CN)
(72) Inventor: WANG, Zhongyi, Ningde, Fujian 352100 (CN)
(74) Representative: Dehns Germany Partnerschaft mbB
(86) International application number: PCT/CN2024/096680
(87) International publication number: WO 2025/044357

(57) **Abstract**

An electrochemical apparatus (100) and an electric device are provided. The electrochemical apparatus (100) includes: a housing (1), a first feedthrough member (7), an electrode assembly (2), and a first tab (3). The housing (1) is provided with an accommodating cavity (14). The electrode assembly (2) is accommodated in the accommodating cavity (14). The housing (1) includes a first side plate (131). The first feedthrough member (7) runs through the first side plate (131), and the first feedthrough member (7) is insulated from the first side plate (131). The first tab (3) is connected to the electrode assembly (2). The electrochemical apparatus (100) further includes a first adapter (5), where the first adapter (5) is accommodated in the accommodating cavity (14). The first tab (3) is provided with a first bending groove (324). One end of the first adapter (5) is connected to a groove wall of the first bending groove (324), and another end of the first adapter (5) is electrically connected to the first feedthrough member (7). Along a thickness direction of the first side plate (131), a projection of the first tab (3) does not overlap with a projection of the first feedthrough member (7). The above manner is conducive to reducing a dimension of the electrochemical apparatus (100) in a width direction. When the dimension of the electrochemical apparatus (100) in the width direction remains unchanged, more space can be left for the electrode assembly (2), which is conducive to increasing the energy density of the electrochemical apparatus (100).

## Description

### CROSS-REFERENCE TO RELATED APPLICATIONS

This application claims priority to Chinese Patent Application No. 202311108445.7, filed with the China National Intellectual Property Administration on August 30, 2023 and entitled "ELECTROCHEMICAL APPARATUS AND ELECTRIC DEVICE", which is incorporated herein by reference in its entirety.

### TECHNICAL FIELD

Some embodiments of this application relate to the field of battery technology, and in particular, to an electrochemical apparatus and an electric device.

### BACKGROUND

In the field of batteries, a portion led out from a tab or a pole is typically referred to as a battery cell head. In the prior art, the tab is typically stacked with a feedthrough member, resulting in a large volume of the battery cell head. This occupies more space inside the battery, leading to energy density loss.

### SUMMARY

Some embodiments of this application provide an electrochemical apparatus and an electric device, aiming to solve the problem that a battery cell head occupies a large space.

To solve the above technical problem, a technical solution adopted by this application is to provide an electrochemical apparatus. The electrochemical apparatus includes: a housing, a first feedthrough member, an electrode assembly, and a first tab, where the housing is provided with an accommodating cavity; the electrode assembly is accommodated in the accommodating cavity; the housing includes a first side plate; the first feedthrough member runs through the first side plate, and the first feedthrough member is insulated from the first side plate; the first tab is connected to the electrode assembly; and the electrochemical apparatus further includes a first adapter, where the first adapter is accommodated in the accommodating cavity; the first tab includes a first connecting portion and a first bending portion; one end of the first connecting portion is connected to the electrode assembly, and another end of the first connecting portion is connected to the first bending portion; one end of the first adapter is electrically connected to the first bending portion, and another end of the first adapter is electrically connected to the first feedthrough member; and along a thickness direction of the first side plate, a projection of the first tab does not overlap with a projection of the first feedthrough member. In an embodiment of this application, the electrode assembly is accommodated in the housing; the first feedthrough member runs through the first side plate of the housing; one end of the first tab is connected to the electrode assembly, another end of the first tab is connected to one end of the first adapter, and another end of the first adapter is connected to the first feedthrough member; and along the thickness direction of the first side plate, the projection of the first tab on the first side plate does not overlap with the projection of the first feedthrough member on the first side plate. This allows the first tab and the first feedthrough member to be misaligned, and avoids the stacking of the first tab and the first feedthrough member along the thickness direction of the first side plate, which is conducive to reducing a dimension of the electrochemical apparatus in a width direction. Alternatively, when the dimension of the electrochemical apparatus in the width direction remains unchanged, more space can be left for the electrode assembly, which is conducive to increasing the energy density of the electrochemical apparatus.

Optionally, the first bending portion is formed with a first bending groove; and one end of the first adapter is inserted into the first bending groove, and one end of the first adapter is connected to a groove wall of the first bending groove. The first bending portion forms an R angle at a bending position to form a gap. Inserting one end of the first adapter into the first bending groove can effectively utilize the gap and avoid waste of space in a battery cell head.

Optionally, the first bending portion includes a first inclined portion, a first bent portion, and a first straight portion, where the first inclined portion is connected to another end of the first connecting portion; two ends of the first bent portion are respectively connected to the first inclined portion and the first straight portion; the first inclined portion, the first bent portion, and the first straight portion collectively enclose the first bending groove; and a surface of the first straight portion facing the first bending groove is connected to one end of the first adapter. In this way, the stacking of the first adapter and the first tab is avoided. In addition, the connection strength between the first adapter and the first tab is enhanced.

Optionally, the electrochemical apparatus further includes a first insulating sheet, where along the thickness direction of the first side plate, the first insulating sheet is disposed between the first straight portion and the first side plate; and the first insulating sheet is configured to insulate the first straight portion from the first side plate. In this way, the first straight portion and the first side plate are insulated from each other.

Optionally, a distance between a surface of the first side plate close to the electrode assembly and one end of the electrode assembly close to the first side plate is denoted as A, and A satisfies: 1.4 mm ≤ A ≤ 2.2 mm. In this way, the structure of the electrochemical apparatus can be relatively compact, and the energy density of the electrochemical apparatus can be increased.

Optionally, a distance between the surface of the first side plate close to the electrode assembly and a surface of the first adapter close to the electrode assembly is denoted as B, and B satisfies: 0.2 mm ≤ B ≤ 2.2 mm. In this way, the structure of the electrochemical apparatus can be relatively compact, and the energy density of the electrochemical apparatus can be increased.

Optionally, the first connecting portion is provided in plurality; and one end of each of the plurality of first connecting portions is connected to the electrode assembly, and another end of each of the plurality of first connecting portions is connected to the first bending portion. In this way, the first tab and the electrode assembly are connected to each other.

Optionally, the electrode assembly includes a first electrode plate, a separator, and a second electrode plate, where the first electrode plate, the separator, and the second electrode plate are stacked and wound in sequence; and one layer of the first electrode plate is connected to one first connecting portion. In this way, the electrode assembly is formed.

Optionally, the electrode assembly includes the first electrode plate, the separator, and the second electrode plate, where the first electrode plate, the separator, and the second electrode plate are each provided in plurality; the first electrode plate and the second electrode plate are alternately stacked in sequence; one separator is located between the first electrode plate and the second electrode plate adjacent to each other; and one first electrode plate is connected to one first connecting portion. In this way, the electrode assembly is formed.

Optionally, the first feedthrough member includes a first pole and a first insulating sleeve, where the first side plate is provided with a first mounting hole; the first insulating sleeve is disposed in the first mounting hole; one end of the first pole is located in the accommodating cavity; one end of the first pole is connected to the first tab; and another end of the first pole runs through the first insulating sleeve and extends out of the housing. In this way, an electrical conduction is formed between the first pole and the first adapter.

Optionally, the electrode assembly further includes a second tab, where one end of the second tab is connected to the electrode assembly, and another end of the second tab is electrically connected to the housing. In this way, an electrical conduction is formed between the second tab and the housing.

Optionally, the electrode assembly further includes a second tab and a second feedthrough member, where the second feedthrough member runs through the housing, and the second feedthrough member is insulated from the housing; and one end of the second tab is electrically connected to the electrode assembly, and another end of the second tab is electrically connected to the second feedthrough member. In this way, an electrical conduction is formed between the second tab and the second feedthrough member.

Optionally, the housing includes a bottom plate and a surrounding plate, where the surrounding plate encloses circumferentially; the bottom plate is connected to one side of the surrounding plate to form a mounting shell; the mounting shell has the accommodating cavity, and the accommodating cavity is provided with an opening; and the first bending groove is disposed closer to the opening than a bottom wall. In this way, the electrode assembly can be turned around a bending position and loaded into the accommodating cavity when loaded into the accommodating cavity, so that the electrode assembly can be loaded into the accommodating cavity more quickly, reducing the interference from the bottom wall.

Optionally, the housing further includes a top plate, where the top plate is connected to another side of the surrounding plate to seal the opening. In this way, the opening of the accommodating cavity is sealed.

According to a second aspect of this application, an electric device is provided and includes the foregoing electrochemical apparatus.

### BRIEF DESCRIPTION OF DRAWINGS

To describe the technical solutions in specific embodiments of this application or in the prior art more clearly, the following briefly describes the drawings required for describing the specific embodiments or the prior art. In all the drawings, similar elements or parts are generally identified by similar reference signs. In the drawings, various elements or parts are not necessarily drawn according to actual scales.
FIG. 1 is a schematic exploded view of an electrochemical apparatus according to an embodiment of this application;
FIG. 2 is a schematic structural diagram of a battery cell head of an electrochemical apparatus according to an embodiment of this application;
FIG. 3 is a schematic structural diagram of a housing of an electrochemical apparatus according to an embodiment of this application;
FIG. 4 is a front view of FIG. 2;
FIG. 5 is a partial cross-sectional view of an electrochemical apparatus according to an embodiment of this application;
FIG. 6 is a partial cross-sectional view of an electrochemical apparatus according to an embodiment of this application;
FIG. 7 is a partial cross-sectional view of an electrochemical apparatus according to an embodiment of this application; and
FIG. 8 is a schematic diagram of assembly of an electrochemical apparatus according to an embodiment of this application, where this figure adopts a perspective drawing method.

### Description of reference signs:

100. electrochemical apparatus; 1. housing; 11. top plate; 12. bottom plate; 13. surrounding plate; 131. first side plate; 132. second side plate; 133. third side plate; 134. fourth side plate; 135. fifth side plate; 136. sixth side plate; 1311. first mounting hole; 14. accommodating cavity; 2. electrode assembly; 21. first electrode plate; 22. second electrode plate; 3. first tab; 31. first connecting portion; 32. first bending portion; 321. first inclined portion; 322. first bent portion; 323. first straight portion; 324. first bending groove; 4. second tab; 41. second connecting portion; 42. second bending portion; 421. second inclined portion; 422. second bent portion; 423. second straight portion; 424. second bending groove; 5. first adapter; 6. second adapter; 7. first feedthrough member; 71. first pole; 72. first insulating sleeve; and 8. first insulating sheet.

### DETAILED DESCRIPTION

To facilitate understanding of this application, a more detailed description of this application will be made below in conjunction with the drawings and specific embodiments. It should be noted that when an element is deemed as being "fixed to" another element, it may be directly fixed to the another element, or there may be one or more elements in between. When an element is deemed as being "connected to" another element, it may be directly connected to the another element, or there may be one or more elements in between. The terms "vertical", "horizontal", "left", "right", and similar expressions used in this specification are for illustrative purposes only.

Unless otherwise defined, all technical and scientific terms used in this specification have the same meanings as commonly understood by those skilled in the art to which this application belongs. The terms used in the specification of this application are only for the purpose of describing specific embodiments and are not intended to limit this application. The term "and/or" used in this specification includes any and all combinations of one or more of the associated listed items.

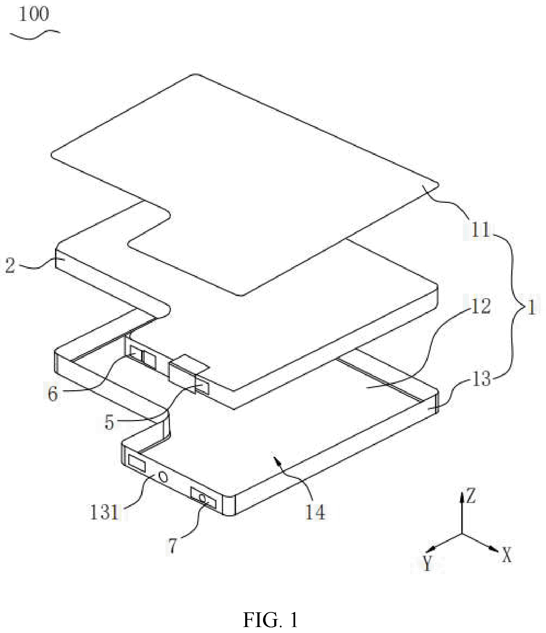

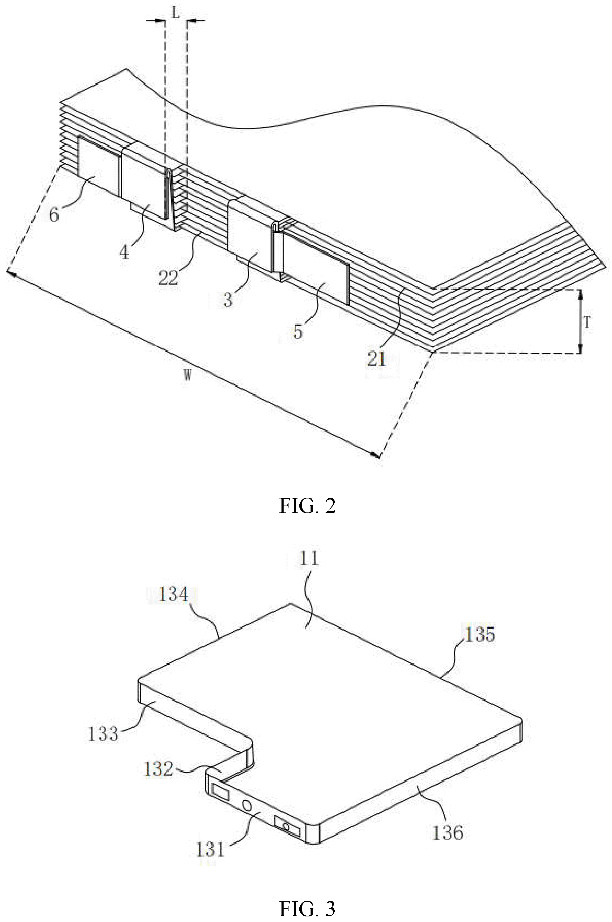

Referring to FIGs. 1 and 2, the electrochemical apparatus 100 includes a housing 1, an electrode assembly 2, a first tab 3, a second tab 4, a first adapter 5, a second adapter 6, and a first feedthrough member 7. The electrode assembly 2 is accommodated in the housing 1. One end of the first tab 3 is electrically connected to the electrode assembly 2, and another end of the first tab 3 is connected to the first adapter 5. One end of the first feedthrough member 7 is connected to the first adapter 5, and another end of the first feedthrough member 7 extends out of the housing 1; and the first feedthrough member 7 is insulated from the housing 1. One end of the second tab 4 is connected to the electrode assembly 2, and another end of the second tab 4 is connected to the housing 1. The housing 1 and the first feedthrough member 7 respectively serve as two electrodes of the electrochemical apparatus 100. For example, the housing 1 is a positive electrode, and the first feedthrough member 7 is a negative electrode. Alternatively, the housing 1 is a negative electrode, and the first feedthrough member 7 is a positive electrode.

For the above housing 1, referring to FIG. 3, the housing 1 includes a top plate 11, a bottom plate 12, and a surrounding plate 13. The surrounding plate 13 includes a first side plate 131, a second side plate 132, a third side plate 133, a fourth side plate 134, a fifth side plate 135, and a sixth side plate 136. The first side plate 131, the second side plate 132, the third side plate 133, the fourth side plate 134, the fifth side plate 135, and the sixth side plate 136 are all plate-shaped. One end of each of the first side plate 131, the second side plate 132, the third side plate 133, the fourth side plate 134, the fifth side plate 135, and the sixth side plate 136 is disposed on the bottom plate 12. In addition, the ends of the first side plate 131, the second side plate 132, the third side plate 133, the fourth side plate 134, the fifth side plate 135, and the sixth side plate 136 are connected end to end in sequence, so that the surrounding plate 13 has a circumferential enclosure structure. The first side plate 131 is disposed opposite the fifth side plate 135. The third side plate 133 is disposed opposite the fifth side plate 135. The fourth side plate 134 and the sixth side plate 136 are disposed opposite each other. The top plate 11 is disposed at another end of the surrounding plate 13. The top plate 11 and the bottom plate 12 are disposed opposite each other. The bottom plate 12, the top plate 11, and the surrounding plate 13 collectively enclose an accommodating cavity 14. The accommodating cavity 14 is used for accommodating the electrode assembly 2, the first tab 3, the second tab 4, the first adapter 5, and the second adapter 6.

During assembly of the electrochemical apparatus 100, the bottom plate 12 and the surrounding plate 13 are first connected to each other. Specifically, the bottom plate 12 is connected to one side of the surrounding plate 13. After the bottom plate 12 and the surrounding plate 13 are connected to each other, a mounting shell is formed, where the mounting shell has the above accommodating cavity 14, and the accommodating cavity 14 has an opening. During assembly, an acute angle or right angle between the electrode assembly 2 and the mounting shell is first maintained. After the first tab 3 is connected to the first feedthrough member 7 and an electrical connection is established, and the second tab 4 is electrically connected to the housing 1, the electrode assembly 2 is then turned and loaded into the accommodating cavity 14, and then the top plate 11 is covered to seal the above opening. Since a position of the electrode assembly 2 does not need to be adjusted again during the process of loading the electrode assembly 2 into the accommodating cavity 14 by turning, the assembly time can be reduced, and the assembly efficiency can be improved.

In the prior art, during assembly of the electrochemical apparatus 100, the electrode assembly 2 is typically not loaded into the accommodating cavity 14 by turning. Therefore, during the process of loading the electrode assembly 2 into the accommodating cavity 14, moving the electrode assembly 2 may cause loosening between the first tab 3 and the first feedthrough member 7 and loosening between the second tab 4 and the housing 1 due to pulling, leading to an unstable electrical connection. In this application, loading the electrode assembly 2 into the accommodating cavity 14 by turning can reduce the probability of the unstable electrical connection of the tabs.

It can be understood that: the shape of the housing 1 is not limited to the above structure, as long as the housing 1 encloses an accommodating cavity 14, and the housing 1 has the first side plate 131. For example, the surrounding plate 13 is connected to both the top plate 11 and the bottom plate 12; and the surrounding plate 13 includes only the first side plate 131, the second side plate 132, the third side plate 133, and the fourth side plate 134 that are connected end to end in sequence. The housing 1 forms a cuboid shape.

It should be noted that: a direction Z from the bottom plate 12 to the top plate 11 constitutes a height direction of the electrochemical apparatus 100; a direction Y from the fifth side plate 135 to the first side plate 131 constitutes a width direction of the electrochemical apparatus 100; the width direction of the electrochemical apparatus 100 is the same as a thickness direction of the first side plate 131; a direction X from the fourth side plate 134 to the sixth side plate 136 constitutes a length direction of the electrochemical apparatus 100; and the length direction of the electrochemical apparatus 100 is the same as a length direction of the first side plate 131.

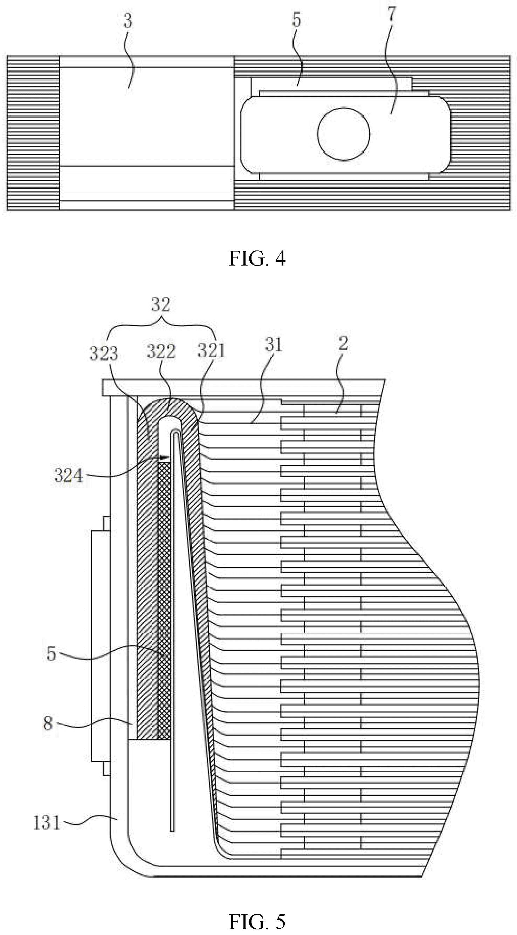

Referring to FIG. 4, after the first tab 3 and the first feedthrough member 7 are adapted through the first adapter 5, along the thickness direction of the first side plate 131, a projection of the first tab 3 does not overlap with a projection of the first feedthrough member 7. This allows the first tab 3 and the first feedthrough member 7 to be misaligned. The first tab 3 and the first feedthrough member 7 are arranged side by side along the length direction of the first side plate 131. This avoids the stacking of the first tab 3 and the first feedthrough member 7 along the thickness direction of the first side plate 131, which is conducive to reducing a dimension of the electrochemical apparatus 100 in the width direction. Alternatively, when the dimension of the electrochemical apparatus 100 in the width direction remains unchanged, more space can be left for the electrode assembly 2, which is conducive to increasing the energy density of the electrochemical apparatus 100.

For the above electrode assembly 2, the electrode assembly 2 includes a first electrode plate 21, a separator (not shown in the figure), and a second electrode plate 22. The first electrode plate 21, the separator, and the second electrode plate 22 are stacked and wound in sequence to form a wound battery cell. Alternatively, the electrode assembly 2 includes multiple first electrode plates 21, multiple separators, and multiple second electrode plates 22. The first electrode plate 21 and the second electrode plate 22 are alternately stacked in sequence. One separator is located between the first electrode plate 21 and the second electrode plate 22 adjacent to each other to form a stacked battery cell.

Referring to FIG. 5, for the above first tab 3 and first adapter 5, the first tab 3 includes multiple first connecting portions 31 and a first bending portion 32. The first connecting portion 31 is located on one side close to the electrode assembly 2, and the first bending portion 32 is located on one side close to the first side plate 131. When the electrode assembly 2 is a wound battery cell, one layer of the first electrode plate 21 of the electrode assembly 2 is connected to one first connecting portion 31. When the electrode assembly 2 is a stacked battery cell, one first electrode plate 21 of the electrode assembly 2 is connected to one first connecting portion 31. Another end of each of the multiple first connecting portions 31 is connected to the first bending portion 32. The first bending portion 32 is formed with a first bending groove 324. One end of the first adapter 5 is inserted into the first bending groove 324, and one end of the first adapter 5 is connected to a groove wall of the first bending groove 324. Compared with a manner in which one end of the first adapter 5 is connected to an outer surface of the first bending portion 32 facing the first side plate 131, this manner has the effect of reducing the excessive space occupied by the first adapter 5 in the accommodating cavity 14, which is conducive to reducing the dimension of the electrochemical apparatus 100 in the width direction, or leaving more space for the electrode assembly 2, thereby increasing the energy density of the electrochemical apparatus 100.

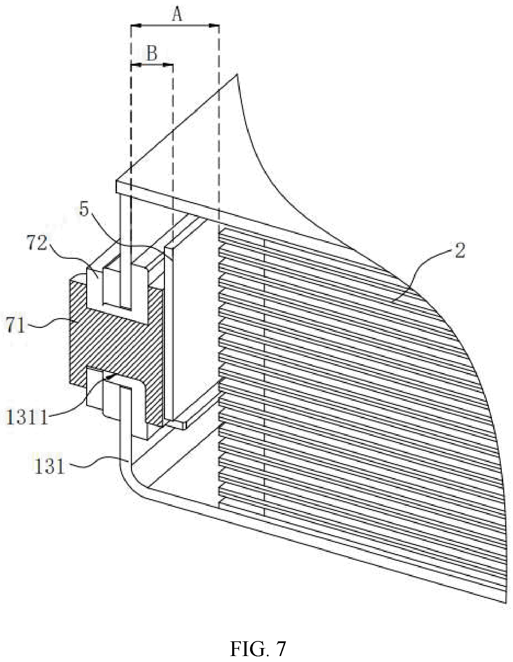

For the above first adapter 5, referring to FIG. 7, a distance between a surface of the first adapter 5 close to the electrode assembly 2 and an inner surface of the first side plate 131 is denoted as B. The inner surface of the first side plate 131 refers to a surface of one side of the first side plate 131 close to the electrode assembly 2. B satisfies: 0.2 mm ≤ B ≤ 2.2 mm. When a value of B is relatively small, the distance between the surface of the first adapter 5 close to the electrode assembly 2 and the inner surface of the first side plate 131 is relatively short, and a superimposed thickness of the first adapter 5 and the first feedthrough member 7 is relatively small, so that the structure of the electrochemical apparatus 100 can be relatively compact, and the energy density of the electrochemical apparatus 100 can be increased.

The above B is preferably 0.7 mm. In this case, the superimposed thickness of the first adapter 5 and the first feedthrough member 7 is relatively small, so that the structure of the electrochemical apparatus 100 is relatively compact, and the energy density of the electrochemical apparatus 100 is relatively high.

It can be understood that the value of the above B may alternatively be 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, or 2.2 mm.

The first adapter 5 may be a flat plate-shaped structure, and the first adapter 5 may alternatively be a bent plate-shaped structure.

Still referring to FIG. 7, a distance between one end of the electrode assembly 2 close to the first side plate 131 and the inner surface of the first side plate 131 is denoted as A, and A satisfies: 1.4 mm ≤ A ≤ 2.2 mm, so that a space between the electrode assembly 2 and the first side plate 131 can be reduced, the structure of the electrochemical apparatus 100 can be relatively compact, and the energy density of the electrochemical apparatus 100 can be increased.

The above A is preferably 1.4 mm. In this case, the distance between the end of the electrode assembly 2 close to the first side plate 131 and the inner surface of the first side plate 131 is relatively short, the structure of the electrochemical apparatus 100 is relatively compact, and the energy density of the electrochemical apparatus 100 is relatively high.

It can be understood that the above A may alternatively be 1.5 mm, 1.6 mm, 1.7 mm, 1.8 mm, 1.9 mm, 2.0 mm, 2.1 mm, or 2.2 mm.

The electrode assembly 2 is connected to different layers of the first electrode plate 21 through multiple first connecting portions 31, so that the current of different layers of the first electrode plate 21 of the wound battery cell can be synchronously transmitted through different first connecting portions 31, which is conducive to improving the charging and discharging efficiency of the electrochemical apparatus 100.

It can be understood that: when the electrode assembly 2 is a wound battery cell, or the electrode assembly 2 is a stacked battery cell, but the stacked battery cell has only one first electrode plate 21, one first connecting portion 31 is also provided, and the first connecting portion 31 is connected to the first electrode plate 21, thereby realizing the connection between the first connecting portion 31 and the electrode assembly 2.

For the above first bending portion 32, still referring to FIG. 5, the first bending portion 32 includes a first inclined portion 321, a first bent portion 322, and a first straight portion 323. The first inclined portion 321 is disposed close to the first connecting portion 31, the first inclined portion 321 is inclined relative to the first side plate 131, and another end of each of the multiple first connecting portions 31 is connected to the first inclined portion 321. The first bent portion 322 is located between the first inclined portion 321 and the first straight portion 323. A shape of the first bent portion 322 is approximately n-shaped, and one end of the first bent portion 322 is connected to the first inclined portion 321. The first straight portion 323 is disposed close to the first side plate 131, the first straight portion 323 is approximately parallel to the first side plate 131, and one end of the first straight portion 323 is connected to another end of the first bent portion 322. A surface of the first straight portion 323 facing the first bending groove 324 belongs to a portion of a groove wall of the first bending groove 324, and the surface of the first straight portion 323 facing the first bending groove 324 is connected to one end of the first adapter 5. Since the first straight portion 323 is straightly disposed, a contact area between the first straight portion 323 and the first adapter 5 can be increased, facilitating the welding between the first adapter 5 and the first bending portion 32.

It should be noted that: the first tab 3 has the multiple first connecting portions 31 and the first bending portion 32; and structures of the first inclined portion 321, the first bent portion 322, and the first straight portion 323 can be directly obtained by cutting a metal member or can be formed by multiple first sub-tabs (not shown in the figure). Specifically, one end of one first sub-tab is connected to one first electrode plate 21 or different layers of the first electrode plate 21, and other ends of the multiple first sub-tabs are stacked and bent to form the above first bending portion 32.

Referring to FIG. 5, in some embodiments, the electrochemical apparatus 100 further includes a first insulating sheet 8. Along the thickness direction Y of the first side plate 131, the first insulating sheet 8 is disposed between the first straight portion 323 and the first side plate 131 to separate the first straight portion 323 and the first side plate 131, thereby realizing the insulation between the first straight portion 323 and the first side plate 131. The first insulating sheet 8 is made of an insulating material such as resin and rubber.

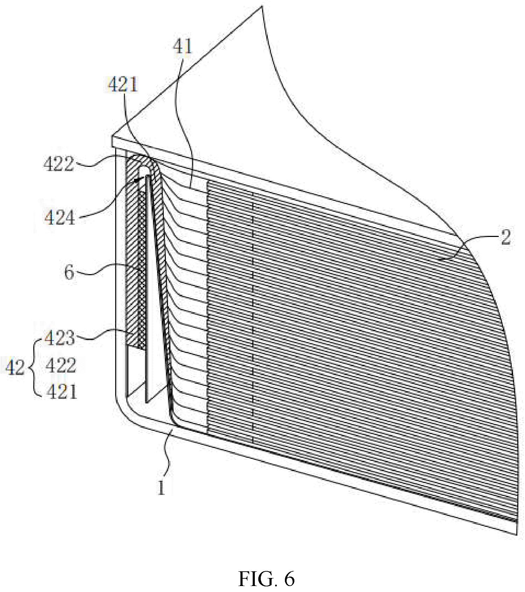

For the above second electrode plate 22, referring to FIG. 6, the second tab 4 includes multiple second connecting portions 41 and a second bending portion 42. The multiple second connecting portions 41 are disposed close to the electrode assembly 2, and the second bending portion 42 is disposed close to the first side plate 131. When the electrode assembly 2 is a wound battery cell, one layer of the second electrode plate 22 of the electrode assembly 2 is connected to one end of one second connecting portion 41. When the electrode assembly 2 is a stacked battery cell, one second electrode plate 22 of the electrode assembly 2 is connected to one end of one second connecting portion 41. Another end of each of the second connecting portions 41 is connected to the second bending portion 42. The second bending portion 42 is formed with a second bending groove 424. One end of the second adapter 6 is inserted into the second bending groove 424, and one end of the second adapter 6 is connected to an inner surface of the second bending portion 42 facing the second bending groove 424. This can reduce the space occupied by the second adapter 6, which is conducive to reducing a dimension of the electrochemical apparatus 100 in the width direction, or leaving more space for the electrode assembly 2, thereby increasing the energy density of the electrochemical apparatus 100.

The multiple second connecting portions 41 are connected to different layers of the second electrode plate 22, so that the current of different layers of the second electrode plate 22 can be synchronously transmitted through different second connecting portions 41, which is conducive to improving the charging and discharging efficiency of the electrochemical apparatus 100.

For the above second bending portion 42, referring to FIG. 6, the second bending portion 42 includes a second inclined portion 421, a second bent portion 422, and a second straight portion 423. The second inclined portion 421 is disposed close to the second connecting portion 41, the second inclined portion 421 is inclined relative to the first side plate 131, and the second inclined portion 421 is connected to another end of the second connecting portion 41. The second bent portion 422 is located between the second inclined portion 421 and the second straight portion 423. A shape of the second bent portion 422 is approximately n-shaped, and one end of the second bent portion 422 is connected to the second inclined portion 421. The second straight portion 423 is disposed close to the first side plate 131, the second straight portion 423 is straightly disposed relative to the first side plate 131, and one end of the second straight portion 423 is connected to another end of the second bent portion 422. The second straight portion 423 is connected to the housing 1 to implement an electrical conduction between the second tab 4 and the housing 1.

Since the second straight portion 423 is straightly disposed, when a surface of the second straight portion 423 facing the second bending groove 424 is connected to one end of the second adapter 6, a contact area between the second straight portion 423 and the second adapter 6 can be increased, which is conducive to the welding of the second adapter 6 and the second straight portion 423, thereby enhancing the connection strength between the second adapter 6 and the second straight portion 423.

It should be noted that: the second tab 4 has the multiple second connecting portions 41 and the second bending portion 42; and structures of the second inclined portion 421, the second bent portion 422, and the second straight portion 423 of the second bending portion 42 can be directly obtained by cutting a metal member or can be formed by multiple second sub-tabs (not shown in the figure). Specifically, one end of one second sub-tab is connected to one second electrode plate 22 or different layers of the second electrode plate 22, and other ends of the multiple first sub-tabs are stacked and bent to form the above second bending portion 42.

For the above first feedthrough member 7, referring to FIG. 7, the first feedthrough member 7 includes a first pole 71 and a first insulating sleeve 72. The first side plate 131 is provided with a first mounting hole 1311. The first insulating sleeve 72 is disposed in the first mounting hole 1311. The first pole 71 is sleeved in the first insulating sleeve 72. The first insulating sleeve 72 insulates the first pole 71 from the housing 1. When the first pole 71 is sleeved in the first insulating sleeve 72, one end of the first pole 71 is in the accommodating cavity 14, one end of the first pole 71 is connected to the second adapter 6, and another end of the first pole 71 extends out of the housing 1.

It should be noted that: in some embodiments, the housing 1 may alternatively not be directly connected to the second adapter 6. The electrochemical apparatus 100 further includes a second feedthrough member (not shown in the figure), where the second feedthrough member runs through the housing 1, and the second feedthrough member is insulated from the housing 1. One end of the second adapter 6 is electrically connected to the second tab 4, and another end of the second adapter 6 is electrically connected to the second feedthrough member, thereby implementing an electrical conduction between the electrode assembly 2 and the second feedthrough member.

Along a thickness direction of a side plate of the housing 1 through which the second feedthrough member passes, a projection of the second tab 4 on the side plate does not overlap with a projection of the second feedthrough member on the side plate, so that the second tab 4 and the second feedthrough member are misaligned, and the second tab 4 and the second feedthrough member are arranged side by side along a length direction of the side plate. This avoids the stacking of the second tab 4 and the second feedthrough member along the thickness direction of the side plate, which is conducive to reducing the dimension of the electrochemical apparatus 100 in the width direction. Alternatively, when the dimension of the electrochemical apparatus 100 in the width direction remains unchanged, more space can be left for the electrode assembly 2, which is conducive to increasing the energy density of the electrochemical apparatus 100.

The second feedthrough member and the first feedthrough member 7 may be disposed on the same side of the housing 1, then the side plate of the housing 1 through which the second feedthrough member passes is the first side plate 131 or the third side plate 133; or the second feedthrough member and the first feedthrough member 7 may be disposed on different sides of the housing 1, then the side plate of the housing 1 through which the second feedthrough member passes is the fifth side plate 135. Certainly, the second feedthrough member may alternatively be disposed on another side plate of the housing 1. For example, the second feedthrough member is disposed on the fourth side plate 134, the sixth side plate 136, or the like.

For the above second feedthrough member, the second feedthrough member includes a second pole (not shown in the figure) and a second insulating sleeve (not shown in the figure). The housing 1 is provided with a second mounting hole (not shown in the figure). The second insulating sleeve is disposed in the second mounting hole. The second pole is sleeved in the second insulating sleeve. One end of the second pole is located in the accommodating cavity 14, one end of the second pole is connected to the second tab 4, and another end of the second pole extends out of the housing 1 from the second insulating sleeve. The second insulating sleeve separates the second pole and the housing 1 to avoid short circuit caused by contact between the second pole and the housing 1.

In some embodiments, the electrochemical apparatus 100 further includes a second insulating sheet (not shown in the figure), where the second insulating sheet is disposed between the housing 1 and the second straight portion 423 to insulate the housing 1 from the second straight portion 423.

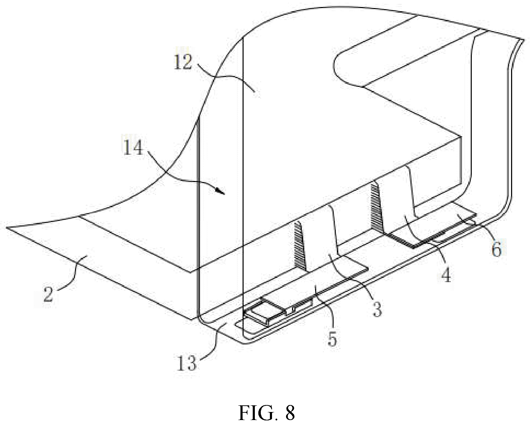

To facilitate the reader's understanding of the inventive concept of this application, an assembly process of the electrochemical apparatus 100 is described below: before installation, the bottom plate 12 and the surrounding plate 13 of the housing 1 are in a connected state to form a mounting shell, and the mounting shell has the above accommodating cavity 14. Since the top plate 11 is not yet connected to the surrounding plate 13, the accommodating cavity 14 has an opening in this case. The first bending groove 324 is disposed closer to the opening than the bottom plate 12, so that when the electrode assembly 2 is loaded into the accommodating cavity 14, the electrode assembly 2 can be turned around the first bending groove and loaded into the accommodating cavity 14. The electrode assembly 2 can be loaded into the accommodating cavity 14 more quickly. Referring to FIG. 8, first, the electrode assembly 2 is laid flat, and the housing 1 is set upright, so that the housing 1 is perpendicular to the electrode assembly 2 or has an acute angle therebetween. Then, two ends of the first adapter 5 are respectively welded to the first straight portion 323 of the first tab 3 and the first pole 71, and two ends of the second adapter 6 are respectively welded to the second straight portion 423 of the second tab 4 and the housing 1, then the electrode assembly 2 is turned and loaded into the accommodating cavity 14, and finally the top plate 11 is covered and the top plate 11 is connected to the surrounding plate 13 to seal the opening of the accommodating cavity 14. During the process of loading the electrode assembly 2 into the accommodating cavity 14 by turning, the first tab 3 is bent to form the first connecting portion 31 and the first bending portion 32. In addition, the second tab 4 is bent to form the second connecting portion 41 and the second bending portion 42.

In these embodiments of this application, the electrode assembly 2 is accommodated in the housing 1. The first feedthrough member 7 runs through the first side plate 131 of the housing 1. One end of the first tab 3 is connected to the electrode assembly 2, another end of the first tab 3 is connected to one end of the first adapter 5, and another end of the first adapter 5 is connected to the first feedthrough member 7. Along the thickness direction of the first side plate 131, a projection of the first tab 3 on the first side plate 131 does not overlap with a projection of the first feedthrough member 7 on the first side plate 131. This allows the first tab 3 and the first feedthrough member 7 to be misaligned, and avoids the stacking of the first tab 3 and the first feedthrough member 7 along the thickness direction of the first side plate 131, which is conducive to reducing the dimension of the electrochemical apparatus 100 in the width direction. Alternatively, when the dimension of the electrochemical apparatus 100 in the width direction remains unchanged, more space can be left for the electrode assembly 2, which is conducive to increasing the energy density of the electrochemical apparatus 100.

Referring to FIG. 2, in a specific embodiment, a width of a battery cell head of the electrochemical apparatus 100 is W mm, a thickness of the battery cell is T mm, and a length at a position where the battery cell head is located is L mm. Compared with the electrochemical apparatus in the prior art, L is shortened by 0.65 mm. Therefore, the energy density gain of the electrochemical apparatus 100 proposed by this application is: 0.65 × W × T / (W × T × L) × 100%, that is, the energy density gain is 0.65 / L × 100%.

An embodiment of this application further provides an electric device. The electric device includes the above electrochemical apparatus 100. For the structure and function of the electrochemical apparatus 100, reference may be made to the above embodiments. Details are not described herein again. The electric device may be a mobile phone, a tablet computer, a drone, an energy storage product, an electric vehicle with one wheel or more than two wheels, an electric tool, or the like.

It should be noted that the specification and the drawings of this application provide preferred embodiments of this application, but this application can be implemented in many different forms and is not limited to some embodiments described in this specification. These embodiments are not intended to impose additional limitations on the content of this application. The purpose of providing these embodiments is to make the understanding of the disclosure of this application more thorough and comprehensive. Furthermore, the above technical features continue to be combined with each other to form various embodiments not listed above, all of which are regarded as the scope described in the specification of this application; further, for those of ordinary skill in the art, improvements or transformations can be made based on the above description, and all these improvements and transformations should belong to the protection scope of the appended claims of this application.

## Claims

1. An electrochemical apparatus, comprising: a housing, a first feedthrough member, an electrode assembly, and a first tab, wherein the housing is provided with an accommodating cavity; the electrode assembly is accommodated in the accommodating cavity; the housing comprises a first side plate; the first feedthrough member runs through the first side plate, and the first feedthrough member is insulated from the first side plate; and the first tab is connected to the electrode assembly; and
the electrochemical apparatus further comprises a first adapter, wherein the first adapter is accommodated in the accommodating cavity; the first tab comprises a first connecting portion and a first bending portion; one end of the first connecting portion is connected to the electrode assembly, and another end of the first connecting portion is connected to the first bending portion; one end of the first adapter is electrically connected to the first bending portion, and another end of the first adapter is electrically connected to the first feedthrough member; and along a thickness direction of the first side plate, a projection of the first tab does not overlap with a projection of the first feedthrough member.

2. The electrochemical apparatus according to claim 1, wherein the first bending portion is formed with a first bending groove; and one end of the first adapter is inserted into the first bending groove and connected to a groove wall of the first bending groove.

3. The electrochemical apparatus according to claim 2, wherein
the first bending portion comprises a first inclined portion, a first bent portion and a first straight portion, wherein the first inclined portion is connected to another end of the first connecting portion; two ends of the first bent portion are respectively connected to the first inclined portion and the first straight portion; the first inclined portion, the first bent portion, and the first straight portion collectively enclose the first bending groove; and a surface of the first straight portion facing the first bending groove is connected to one end of the first adapter.

4. The electrochemical apparatus according to claim 3, wherein
the electrochemical apparatus further comprises a first insulating sheet; and along the thickness direction of the first side plate, the first insulating sheet is disposed between the first straight portion and the first side plate; and the first insulating sheet is configured to insulate the first straight portion from the first side plate.

5. The electrochemical apparatus according to claim 1, wherein a distance between a surface of the first side plate close to the electrode assembly and one end of the electrode assembly close to the first side plate is denoted as A, and A satisfies: 1.4 mm ≤ A ≤ 2.2 mm.

6. The electrochemical apparatus according to claim 1, wherein a distance between a surface of the first side plate close to the electrode assembly and a surface of the first adapter close to the electrode assembly is denoted as B, and B satisfies: 0.2 mm ≤ B ≤ 2.2 mm.

7. The electrochemical apparatus according to claim 1, wherein
the first connecting portion is provided in plurality; and one end of each of the plurality of first connecting portions is connected to the electrode assembly, and another end of each of the plurality of first connecting portions is connected to the first bending portion.

8. The electrochemical apparatus according to claim 7, wherein
the electrode assembly comprises a first electrode plate, a separator, and a second electrode plate; the first electrode plate, the separator, and the second electrode plate are stacked and wound; and one layer of the first electrode plate is connected to one first connecting portion.

9. The electrochemical apparatus according to claim 8, wherein
the electrode assembly comprises the first electrode plate, the separator, and the second electrode plate; the first electrode plate, the separator, and the second electrode plate are each provided in plurality; the first electrode plate and the second electrode plate are alternately stacked in sequence; one separator is located between the first electrode plate and the second electrode plate adjacent to each other; and one first electrode plate is connected to one first connecting portion.

10. The electrochemical apparatus according to any one of claims 1 to 9, wherein the first feedthrough member comprises a first pole and a first insulating sleeve;
the first side plate is provided with a first mounting hole; the first insulating sleeve is disposed in the first mounting hole; one end of the first pole is located in the accommodating cavity; one end of the first pole is connected to the first tab; and another end of the first pole runs through the first insulating sleeve and extends out of the housing.

11. The electrochemical apparatus according to any one of claims 1 to 9, wherein the electrode assembly further comprises a second tab; and one end of the second tab is connected to the electrode assembly, and another end of the second tab is electrically connected to the housing.

12. The electrochemical apparatus according to any one of claims 1 to 9, wherein the electrode assembly further comprises a second tab and a second feedthrough member; the second feedthrough member runs through the housing, and the second feedthrough member is insulated from the housing; and one end of the second tab is electrically connected to the electrode assembly, and another end of the second tab is electrically connected to the second feedthrough member.

13. The electrochemical apparatus according to any one of claims 1 to 9, wherein the housing comprises a bottom plate and a surrounding plate; the surrounding plate encloses circumferentially; the bottom plate is connected to one side of the surrounding plate to form a mounting shell; the mounting shell has the accommodating cavity, and the accommodating cavity is provided with an opening; and the first bending groove is disposed closer to the opening than the bottom plate.

14. The electrochemical apparatus according to any one of claims 1 to 13, wherein the housing further comprises a top plate; and the top plate is connected to another side of the surrounding plate to seal the opening.

15. An electric device, comprising the electrochemical apparatus according to any one of claims 1 to 14.
